# FASCICULE DE BREVET EUROPEEN

(11) **EP 0 530 113 B1**
(45) Date de publication et mention de la délivrance du brevet: **30.08.1995**
(21) Numéro de dépôt: 92420243.5
(22) Date de dépôt: 21.07.1992
(51) Int. Cl.: D04H 1/44, D06M 15/595, C08G 73/02

(54) **Procédé pour la fabrication d'une nappe non tissée lavable à base de coton**
Verfahren zur Herstellung einer waschbaren Vliesstoffbahn aus Baumwolle
Method for producing a washable non-woven web in cotton

(30) Priorité: 25.07.1991 FR 9109697
(43) Date de publication de la demande: 03.03.1993
(73) Titulaire: ICBT PERFOJET, 38330 Montbonnot (FR)
(72) Inventeur: Vuillaume, André, F-38330 Biviers (FR); Lacazale, Jean-Claude, F-73110 Presle (FR)
(74) Mandataire: Laurent, Michel

(56) Documents cités:
- EP-A- 0 337 451
- DE-A- 1 546 369
- DE-A- 1 569 015
- US-A- 3 305 493

## Description

L'invention concerne un procédé pour la fabrication d'une nappe non tissée selon le préambule de la revendication 1, légère et lavable à base de coton.

Un tel procédé est connu du document EP-A-0 337 451.

Dans les documents US-A-3 214 819, 3 485 706 et 3 508 308, on a décrit un procédé pour la fabrication de nappes non tissées, dans laquelle la cohésion et l'entrelacement des fibres élémentaires entre elles, est obtenue, non plus par voie mécanique, mais par une pluralité de Jets d'eau sous pression traversant un voile ou une nappe en déplacement et, à l'instar des aiguilles, provoquant l'entremêlement des fibres entre elles. Ces nappes non tissées sont connues dans la littérature sous le terme anglais de "nappes spunlace" ou de "spunlace". Il n'est donc pas utile de les décrire ici en détail. Ces nappes "spunlace" se définissent essentiellement par le fait que leur consolidation résulte d'un entrelacement hydraulique.

Il est bien connu par ailleurs de réaliser des nappes non tissées en coton, par voie sèche ou même par voie humide c'est-à-dire papetière. Ces nappes non tissées en coton sont essentiellement recherchées pour leur pouvoir absorbant. Elles sont donc à usage unique, notamment pour l'hygiène, la médecine, ou code élément d'essuyage.

On a proposé de réaliser des nappes "spunlace" en coton. On obtient ainsi des étoffes légères, très douces au toucher et légèrement duveteuses. Malheureusement, ces nappes présentent à l'état humide une mauvaise résistance à l'abrasion. En d'autres termes, ces nappes "spunlace" à base de coton, dès qu'elles sont mouillées, perdent leur drapé et leur main textile, qui sont pourtant très recherchées. Il est donc exclu de pouvoir laver ces nappes qui se délitent très rapidement dès le premier lavage.

Or pourtant, le marché recherche de plus en plus des nappes légères à base de coton susceptibles d'être lavées plusieurs fois, tout en conservant leur toucher et leur drapé textiles.

Pour pallier ces inconvénients, on a propose d'introduire dans ces nappes "spunlace" de coton des liants, notamment des latex. Malheureusement, ce procédé ne donne pas satisfaction, car l'incorporation de tels liants modifie considérablement le toucher et le drapé des produits et également leur capacité d'absorption, ainsi que la souplesse.

Pour toutes ces raisons, il n'est pas possible jusqu'alors de réaliser des nappes "spunlace" en coton lavables, tout en conservant l'essentiel de leurs propriétés mécaniques et textiles qui sont de plus en plus recherchées.

L'invention pallie ces inconvénients.

Elle vise un procédé perfectionné pour la fabrication de nappes "spunlace" en coton, qui permette d'obtenir de manière économique et fiable de telles nappes "spunlace" en coton lavables, qui conservent leurs qualités mécaniques et textiles même après plusieurs lavages (cinq lavages et plus).

Le procédé selon l'invention pour la fabrication d'une nappe non tissée de type spunlace à base de fibres de coton, qui consiste en continu :
. à faire avancer une nappe à base de fibres de coton,
. à entrelacer ces fibres à l'aide d'une pluralité de jets d'eau sous pression,
. à sécher cette nappe entrelacée,
. et enfin, à réceptionner la nappe "spunlace" ainsi obtenue,
se caractérise :
- en ce que après l'entrelaçage et avant le séchage, on essore l'eau libre contenue dans la nappe entrelacée ;
- puis, en ce que on imprègne cette nappe essorée au moyen d'une solution aqueuse d'une résine de polyamide-amine-épichlorhydrine (PAE) à raison, mesurée en produits secs, de 0,2 % à 1 % du poids des fibres de coton ;
- et en ce que, après avoir exprimé l'excès de solution, on sèche la nappe imprégnée, à une température suffisante pour au moins amorcer la réticulation de la résine PAE déposée.

En d'autres termes, l'invention consiste à préparer une nappe "spunlace" à base de fibres de coton de manière connue, puis après entrelaçage mais avant séchage, à essorer cette nappe mouillée, puis à l'imprégner d'une solution aqueuse d'une résine PAE à raison de 0,2 à 1 % du poids des fibres de coton. Après avoir amorcé et complété la réticulation de la résine PAE, de manière inattendue et surprenante, on obtient une nappe "spunlace" lavable, présentant d'excellentes propriétés mécaniques, une bonne main, un bon drapé, une bonne souplesse, même après plusieurs lavages répétés.

Avantageusement, en pratique :
- la nappe de base comprend pour partie majoritaire du coton ; ces fibres de coton peuvent être mélangées à des fibres d'autre nature, notamment cellulosique : viscose, lin, ramie, etc., voire des fibres synthétiques tel que polyamide, polyester, polypropylène, notamment pour améliorer les propriétés mécaniques de la nappe ; ces fibres peuvent être de même longueur ou non que celles des fibres de coton ;
- la nappe à base de fibres de coton de base, a un poids compris entre 30 et 300 g/m2 ; en effet, on a observé que si ce poids est inférieur à 30 g/m2, la nappe ou plus exactement le voile a peu de liaisons et peu de cohérence et est difficile à manipuler et à entrelacer par jets d'eau ; de même, si le poids excède 300 g/m2, le procédé manque d'intérêt économique ; on a observé qu'on obtenait de bons résultats avec des nappes de base dont le poids était compris entre 30 et 100 g/m2 ;
- l'entrelaçage par jet d'eau sous pression est effectué de manière connue (pression entre 30 et 250 bars), les jets étant dirigés sur l'une ou les deux faces de la nappe de base ;
- l'essorage de l'eau libre contenue dans la nappe entrelacée mouillée est effectué par foulardage ou aspiration ; on exprime ainsi toute l'eau libre, c'est-à-dire l'eau comprise entre les fibres de coton, à l'exclusion de l'eau incluse dans ces fibres de coton (eau absorbée);
- l'imprégnation de la solution de PAE s'effectue par toute technique appropriée, telle que imprégnation, foulardage, plein bain, pulvérisation ; la quantité de résine déposée en section sec est comprise entre 0,2 et 1 % ; en effet, on a observé que si cette quantité est inférieure à 0,2 %, on n'obtient aucune amélioration significative ; en revanche, si cette quantité excède 1 %, on n'observe aucune amélioration, alors que l'on augmente inutilement le coût ; la quantité déposée est variable en fonction des applications envisagées et des critères de lavabilité, et selon que l'on désire obtenir des produits semi-durables (susceptibles d'être lavés trois à dix fois), ou durables (dix lavages et plus) ; on a observe que l'on obtenait de bons résultats avec des quantités de l'ordre de 0,4 à 0,8 % ;
- après imprégnation, on ajuste la concentration de la solution aqueuse de PAE par foulardage, puis en continu, on sèche la nappe "spunlace" imprégnée, et ce par tous moyens connus, tels que four à air traversant, cylindres sécheurs, rame, lampes à infra-rouge, etc. ; il est indispensable de chauffer à une température suffisante pour provoquer la réticulation de la résine PAE, plus exactement pour amorcer cette réticulation ; en pratique, on sèche à une température d'au moins 140°C ;
- après réception sur la bobine, on laisse la réticulation s'achever sur le produit façonné, par exemple par stockage pendant une à deux semaines à température ambiante.

Comme on le sait, les résines polyamide-amine-épichlorhydrine (PAE), sont généralement obtenues par polycondensation d'un diacide carboxylique et d'une triamine, puis réaction de l'épichlorhydrine avec les chaines de bas poids moléculaire de la polyamide-polyamine. L'épichlorhydrine transforme les fonctions amines secondaires en amines tertiaires, voire même en ammoniums quaternaires, et introduit alors dans la chaine des points de branchement. Il en résulte des polymères de bas poids moléculaire, légèrement articulés, notamment pour pouvoir être facilement solubles dans l'eau, présentant un caractère cationique, même pour des pH légèrement alcalins et des possibilités de réticulation.

On pense que la résistance à l'état humide obtenue (REH), résulte des groupements de ces résines susceptibles d'intervenir, à savoir :
- les fonctions amines secondaire et tertiaire ;
- les groupes epoxy ;
- les groupes azetidinium.

Ces deux derniers groupes sont susceptibles de donner des liaisons covalentes par action avec d'autres groupes de la résine (homoréticulation), ou avec des groupements fonctionnels des fibres de coton (coréticulation). Le développement de la résistance à l'état humide est accéléré par chauffage à 140°C et plus. On a en effet observé que la résistance à l'état humide (REH) des nappes "spunlace" conformes à l'invention, est obtenue partiellement au séchage, et que cette résistance continue à se développer pendant le stockage. Cela doit provenir pour partie du fait que le mûrissement de la résine se prolonge lors du stockage.

Les résines de polyamide-amine-épychlorhydrine (PAE) sont bien connues. Ces résines sont disponibles dans le commerce, notamment sous les dénominations suivantes :
- NAVADIN LTS ou LTN-A de la société allemande BAYER,
- KYMENE 557 H ou 709 de la société américaine HERCULES.

Ces résines sont utilisées à ce jour pour la fabrication du papier, en les incorporant à la pâte dans le pulpeur en vue de donner au papier une bonne résistance à l'humide, notamment pour fabriquer des sachets de thé. Dans cette technique, la résine est introduite dans la pâte donc à l'humide, et non sur un voile sec. Les papiers obtenus présentent malheureusement aucune résistance au lavage, ce qui n'est pas gênant pour l'application envisagée qui est à usage unique.

Il est surprenant de constater que la sélection parmi les différentes nappes connues à base de coton d'une nappe "spunlace", combinée avec un liage à très faible quantité d'une résine particulière, à savoir la résine PAE, permet de résoudre avec succès un problème qui se posait depuis longtemps, à savoir la possibilité de réaliser des nappes "spunlace" lavables, qui conservent même après plusieurs lavages répétés, non seulement toutes leurs propriétés mécaniques, mais également toutes leurs caractéristiques textiles de toucher, de drapabilité, de souplesse, etc ..

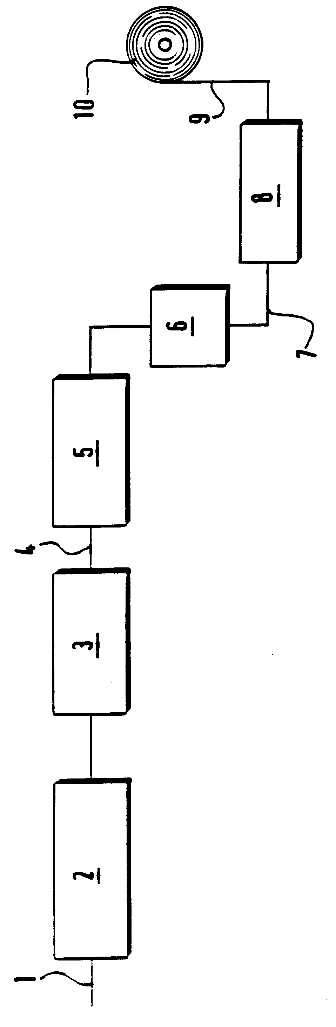

La manière dont l'invention peut être réalisée et les avantages qui en découlent ressortiront mieux des exemples de réalisation qui suivent, à l'appui de la figure unique annexée.

La figure unique annexée schématise une installation pour la mise en oeuvre du procédé selon l'invention. Dans cette installation continue, les références suivantes désignent :
- (1) : une nappe de base en fibres de coton
- (2) : le premier ensemble de liaison de la machine de liage hydraulique, telle que celle vendue par le Déposant sous la dénomination JETLACE ;
- (3) : le second ensemble de liaison hydraulique de cette même machine, pour entrelacer l'autre face, afin d'améliorer la résistance à l'abrasion ; en pratique, on règle la quantité d'énergie transférée par les jets d'eau des ensembles de liage (2,3) à la nappe (1) à une valeur comprise entre 0,2 et 1,1 kWH par kilo de fibres, et on règle le diamètre des jets d'eau à une valeur comprise entre 100 et 150 microns, à une pression comprise entre 30 et 250 bars ;
- (4) : la nappe mouillée entrelacée obtenue ;
- (5) : le poste de foulardage pour exprimer l'eau libre contenue dans la nappe "spunlace" mouillée (4) (eau résiduelle absorbée de l'ordre de 30 %) ;
- (6) : l'ensemble d'imprégnation de la solution aqueuse de PAE ;
- (7) : la nappe "spunlace" imprégnée de PAE ;
- (8) : l'ensemble de séchage, par exemple chauffé à 140°C ;
- (9) : la nappe "spunlace" lavable obtenue renvidée sous forme de bobine (10).

Les ensembles d'entrelaçage (2,3) et d'imprégnation (6) peuvent être associés à des caisses aspirantes destinées à éliminer partie de l'eau, ces caisses pouvant remplacer le poste de foulardage (5).

### Exemple 1 :

De manière connue au moyen de l'installation (2,3), on prépare une nappe "spunlace" (4) pesant 35 g/m2 à base de fibres de coton blanchies cardées. On règle la pression des injecteurs (2,3) à 90 bars, et le diamètre des buses de l'injecteur à 0,12 mm. La vitesse d'avancée de la nappe (1) est réglée à 60 m/min. Après séchage de la nappe (4), puis renvidage immédiat (technique classique), on obtient une nappe "spunlace" présentant une excellente main, un bon toucher, mais qui dès le premier lavage, se délite entièrement et ne peut donc plus être réutilisé.

Il s'agit donc d'une nappe à usage unique.

### Exemple 2 :

On répète l'exemple 1. Toutefois, la nappe (4) mouillée obtenue, après essorage (5), est imprégnée par foulardage d'une solution aqueuse d'une résine PAE commercialisée par HERCULES sous la dénomination "KYMENE 557 H". Par foulardage, on règle la quantité déposée (sec sur sec) à 0,8 %. En (8), on sèche sur un cylindre à l'air traversant à 150°C, puis on stocke la nappe "spunlace" (9) imprégnée obtenue pendant deux semaines pour achever la réticulation-mûrissement de la résine PAE.

Après huit lavages ménagers courants à 70°C en machine à laver par de l'eau additionnée de détergent du commerce, on observe sur la nappe "spunlace" imprégnée (9) obtenue aucune détérioration significative, aussi bien des propriétés mécaniques (résistance à l'abrasion, à la déchirure) que des propriétés textiles (toucher, drapé, souplesse).

### Exemple 3 :

On répète l'exemple 2 en ramenant la quantité déposée à 0,2 %.

La nappe "spunlace" imprégnée obtenue (9) résiste seulement à trois lavages ménagers.

### Exemple 4 :

On répète l'exemple 2 en remplaçant la nappe (1) par une feuille papetières à base de fibres de coton pesant environ 80 g/m2.

La résine PAE ne se fixe pas sur les fibres de coton et ne pénètre pas dans la feuille, de sorte que celle-ci n'est pas lavable et ne présente aucune propriété textile de drapé ou de toucher.

Le procédé selon l'invention présente de nombreux avantages par rapport à ceux commercialisés à ce jour. On peut citer :
- l'absence de modification des caractéristiques de la nappe "spunlace" à base de coton, qui conserve toutes ses propriétés textiles, notamment de toucher, de souplesse, de drapé et d'absorption ;
- une bonne conservation de ses propriétés textiles et des propriétés mécaniques, même après plusieurs lavages répétés ;
- une bonne amélioration des propriétés à l'état humide.

De la sorte, ces nappes peuvent être utilisées avec succès dans de nombreux domaines d'application où l'on recherche à la fois le toucher textile, des propriétés mécaniques et la possibilité d'être lavées plusieurs fois. On peut citer les chiffons d'essuyage, les linges de table, de maison, la confection de vêtements, notamment de travail, les doublures, etc . .

## Revendications

1. Procédé pour la fabrication d'une nappe non tissée de type spunlace à base de fibres de coton, qui consiste en continu :
. à faire avancer une nappe (1) à base de fibres de coton,
. à entrelacer (2,3) ces fibres à l'aide d'une pluralité de jets d'eau sous pression,
. à sécher (8) cette nappe entrelacée,
. et enfin, à réceptionner (10) la nappe "spunlace" (9) ainsi obtenue,
caractérisé :
- en ce que après l'entrelaçage (2,3), et avant le séchage (8), on essore (5) l'eau libre contenue dans la nappe entrelacée (4) ;
- puis, en ce que on imprègne (6) cette nappe essorée au moyen d'une solution aqueuse d'une résine de polyamide-amine-épichlorhydrine (PAE) à raison, mesurée en produits secs, de 0,2 % à 1 % du poids des fibres de coton ;
- et en ce que, après avoir exprimé l'excès de solution, on sèche (8) la nappe imprégnée (7), à une température suffisante pour au moins amorcer la réticulation de la résine PAE déposée.

2. Procédé selon la revendication 1, caractérisé en ce que la nappe (1) de fibres de base comprend pour partie majoritaire des fibres de coton.

3. Procédé selon l'une des revendications 1 et 2, caractérisé en ce que la nappe (1) a un poids compris entre 30 et 300 g/m2.

4. Procédé selon l'une des revendications 1 à 3, caractérisé en ce qu'on essore (5) l'eau libre de la nappe mouillée entrelacée (4) par foulardage.

5. Procédé selon l'une des revendications 1 à 4, caractérisé en ce qu'on imprègne (6) par foulardage et en ce qu'on dépose en produits secs de 0,4 à 0,8 % de résine PAE.

6. Procédé selon la revendication 4, caractérisé en ce que on sèche (8) la nappe imprégnée (7) de résine PAE à une température d'au moins 140°C.

7. Procédé selon la revendication 6, caractérisé en ce que après séchage (8), on laisse la réticulation de la résine PAE se poursuivre à température ambiante sur la bobine pendant une à trois semaines.

## Claims

1. A processs for producing a spunlace non-woven cotton fabric, which continuously consists in:
- advancing a non-woven cotton fibers fabric (1);
- interlacing (2,3) these fibers by means of a plurality of pressurized jets of water;
- drying (8) this interlaced fabric;
- and finally, taking delivery of the spunlace fabric (9) thus obtained;
**characterized:**
- in that, after interlacing (2,3), and before drying (8), the free water contained in the interlaced fabric (4) is drained (5);
- then, said drained fabric is impregnated (6) by using an aqueous solution of a polyamide-amine-epichlorlydine (PAE) resin in an amount, measured as dry products of 0,2 % to 1 % of the weight of the cotton fibers;
- and that, after having expelled the excess of the solution, the impregnated fabric (7) is dried, at a temperature sufficient to at least initiate the crosslinking of the PAE resin deposited.

2. A process according to claim 1, characterized in that the basic non-woven fabric (1) is mainly of cotton fibers.

3. A process according to any claim 1 and 2, characterized in that the fabric (1) has a weight of between 30 to 300 g/m2.

4. A process according to any claims 1 to 3, characterized in that the draining (5) of the free water of the wet interlaced fabric (4) is carried out by padding.

5. A process according to any claims 1 to 4, characterized in that the impregnation (6) is carried by padding and from 0,4 % to 0,8 % of PAE resin is deposited in dry products.

6. A process according to claim 4, characterized in that the drying (8) of the fabric (7) impregnated with PAE resin is carried out at a temperature of at least 140° C.

7. A process according to claim 6, characterized in that after drying (8), the crosslinking of the PAE resin is allowed to continue at ambient temperature on a reel for one to three weeks.

## Patentansprüche

1. Verfahren zur Herstellung eines Vliesstoffs vom Typ Spunlace auf Baumwollbasis im Durchlaufverfahren, bei dem eine durchlaufende Stoffbahn (1) aus Baumwollfasern mit Hilfe einer Vielzahl von unter Druck stehenden Wasserstrahlen verfestigt wird (2,3); die so verfestigte Stoffbahn getrocknet (8) und schließlich die derart hergestellte "Spunlace"-Stoffbahn (9) abgenommen wird (10), dadurch gekennzeichnet, daß nach dem Verfestigungsvorgang (2,3) und vor dem Trocknen (8) das von der Stoffbahn (4) nicht aufgenommene Wasser ausgepreßt wird,
- daß danach die Stoffbahn mit einer wässrigen Lösung aus Polyamid-Amin-Epichlorhydrin (PAE) im Verhältnis von 0,2 bis 1 % in Trockenmasse zum Gewicht der Zellstoffasern imprägniert (6) wird,
- daß nach dem Auspressen der überschüssigen Lösung die imprägnierte Stoffbahn (7) bei einer Temperatur getrocknet wird, deren Höhe ausreicht, um die Vernetzung des aufgebrachten PAE-Harzes zumindest einzuleiten.

2. Verfahren gemäß Patentanspruch 1, dadurch gekennzeichnet, daß die Stoffbahn (1) zum überwiegenden Teil aus Baumwollfasern besteht.

3. Verfahren gemäß Patentanspruch 1 und 2, dadurch gekennzeichnet, daß die Stoffbahn (1) ein Gewicht zwischen 30 und 300 g/m2 aufweist.

4. Verfahren gemäß Patentanspruch 1 bis 3, dadurch gekennzeichnet, daß das ungebundene Wasser aus dem feuchten Faservlies (4) durch Foulardierung ausgepreßt (5) wird.

5. Verfahren gemäß einem der Patentansprüche 1 bis 4, dadurch gekennzeichnet, daß der Stoff durch Foulardierung unter Aufbringung von PAE-Harz in einer Trockenmenge von 0,4 bis 0,8 % imprägniert (6) wird.

6. Verfahren gemäß Patentanspruch 4, dadurch gekennzeichnet, daß der mit PAE-Harz imprägnierte Stoff (7) bei einer Temperatur von mindestens 140°C getrocknet wird.

7. Verfahren gemäß Patentanspruch 6, dadurch gekennzeichnet, daß nach der Trocknung (8) die Vernetzung des PAE-Harzes auf der Rolle bei Umgebungstemperatur eine bis drei Wochen lang fortgesetzt wird.
